Europäisches Patentamt

European Patent Office

Office européen des brevets

(11) Veröffentlichungsnummer: **0 355 638 B1**

(12) **EUROPÄISCHE PATENTSCHRIFT**

(45) Veröffentlichungstag der Patentschrift: **02.12.92**

(51) Int. Cl.⁵: **B29C 47/12**, //B29L30/00

(21) Anmeldenummer: **89114965.0**

(22) Anmeldetag: **12.08.89**

(54) **Laufstreifen-Spritzkopf.**

(30) Priorität: **18.08.88 DE 8810470 U**

(43) Veröffentlichungstag der Anmeldung:
**28.02.90 Patentblatt 90/09**

(45) Bekanntmachung des Hinweises auf die
Patenterteilung:
**02.12.92 Patentblatt 92/49**

(84) Benannte Vertragsstaaten:
**AT BE CH DE ES FR GB IT LI NL SE**

(56) Entgegenhaltungen:
**DD-A- 19 452**
**US-A- 3 093 860**
**US-A- 4 470 790**

(73) Patentinhaber: **A-Z Formen und Maschinenbau GmbH**
**Frohschammerstrasse 14**
**W-8000 München 40(DE)**

(72) Erfinder: **Hilke, Rainer**
**Josef-Fischhaber-Strasse 42**
**W-8130 Starnberg(DE)**
Erfinder: **Schmaderer, Gerhard**
**Bäumlstrasse 5**
**W-8490 Cham(DE)**

(74) Vertreter: **Patentanwälte Dipl.-Ing. R. Splanemann Dr. B. Reitzner Dipl.-Ing. K. Baronetzky**
**Tal 13**
**W-8000 München 2(DE)**

## Beschreibung

Die Erfindung betrifft einen Laufstreifen-Spritzkopf für Reifen-Laufstreifen gemäß dem Oberbegriff von Anspruch 1.

Ein Laufstreifen-Spritzkopf mit Einstellmöglichkeiten für das Laufstreifenprofil ist aus der US-PS 27 20 679 seit langem bekannt. Derartige Spritzköpfe weisen eine Vielzahl von vertikalen Schiebern auf, mit denen die Dicke des Laufstreifenprofiles an jeder Stelle geregelt können werden soll. Zusätzlich ist es bei dieser Konstruktion vorgesehen, die Breite des Laufstreifenprofils über eine Art Flankenmesser einzustellen, dessen Anstellwinkel zusätzlich verstellbar ist, so daß der Extrusionswinkel der Flanken oder "wings", wie sie auch bezeichnet werden, einstellbar ist.

Dieser Spritzkopf ist für den schnellen Wechsel zwischen unterschiedlichen Breiten, wie er beispielsweise beim Runderneuern erforderlich ist, nicht geeignet. Vielmehr müssen eine Vielzahl von vertikalen Schiebern verstellt werden, damit die neue Form erzeugt werden kann. Die Konstruktion ist vergleichsweise bauaufwendig und störanfällig und dennoch nicht sehr präzise, denn die Flankenmesser neigen je nach Extrusionsgeschwindigkeit zu leichten elastischen Verbiegungen. Zudem wird durch die Flankenmesser stets Ausschußkautschuk erzeugt, der dann erst später ggf. separat weiterverarbeitet werden kann.

Ferner ist aus der gattungsgemäßen US-PS 38 70 453 ein Laufstreifen-Spritzkopf bekannt, der sich durch einen in einem Stück verstellbaren Dickenverstellschieber auszeichnet, mit dem aufgrund der im wesentlichen trapezförmigen Gestalt des Laufstreifenprofils sowie der Tatsache, daß der Dickenverstellschieber von unten, also von der längeren Trapezseite, herangeführt wird, zugleich die Breite des Laufstreifens verstellbar ist. Jedoch ist hierbei keine Feineinstellmöglichkeit gegeben, denn es wird stets zugleich Breite und Stärke des Laufstreifenprofils verändert. Aufgrund der enormen Drücke in der dem Extruder nachgeschalteten Kammer ist ein stabiler Querbalken vorgesehen, und der Dickenverstellschieber über eine spezielle Gleitplatte abgestützt, die sich über ein Hebelwerk wegschwenken läßt, wenn beispielsweise der Spritzkopf gereinigt werden soll. Diese Konstruktion neigt vergleichsweise leicht zur Verkantung bei der Verschiebung des Dickenverstellschiebers. Zudem ist keine Möglichkeit gegeben, Bindegummi zu koextrudieren.

Demgegenüber ist es Aufgabe der Erfindung, einen Laufstreifen-Spritzkopf gemäß dem Oberbegriff von Anspruch 1 zu schaffen, der eine größere Flexibilität mit einer präzisen Dimensionierung des Laufstreifenprofils verbindet und dennoch mechanisch vergleichsweise wenig aufwendig ist.

Diese Aufgabe wird erfindungsgemäß durch Anspruch 1 gelöst. Vorteilhafte Weiterbildungen ergeben sich aus den Unteransprüchen.

Besonders günstig bei der Erfindung ist es, daß durch das Abschwenken des Spritzkopfriegels in einer sehr einfachen Weise die Flankenschablonen freigelegt werden. Dadurch, daß diese auf separaten Stellgliedern einfach aufgesetzt sind, können sie leicht entnommen werden, werden aber trotzdem bei angeschwenktem Spritzkopfriegel dann präzise und exakt geführt. Hierbei stützt dann der Dickenverstellschieber zugleich die obere Partie jeder Flankenschablone ab, was aufgrund der enormen Kräfte, die beim schnellen Extrudieren entstehen, günstig ist.

Durch das Andrücken wird zugleich auch die Abdichtung begünstigt, so daß keine separaten Dichtelemente vorgesehen sein müssen.

Außerdem kann durch das Abschwenken (oder sonstiges Wegbewegen) des Spritzkopfriegels das Innere des Spritzkopfes leicht zugänglich gemacht werden, so daß die Reinigung vereinfacht wird.

Mit der erfindungsgemäßen Anordnung von Dickenverstellschieber und Flankenschablonen ist außerdem stets die optimale Profilierung des Laufstreifens, und zwar in beliebigen Abmessungen möglich. Durch entsprechende Profilierung der Flankenschablonen kann sichergestellt sein, daß die Wings nicht völlig spitz auslaufen, sondern praktisch kleine Seitenflächen aufweisen, die zudem auch noch verrundet sein können.

Diese Ausbildung mit abgeschnittenen Enden der Wings ist für die Weiterverarbeitung günstiger.

Dadurch, daß die Flankenschablonen seitlich nach außen verlängert sind, ist ferner sichergestellt, daß sie sich auch in der längsten Profilstellung an ihren äußeren unteren Enden abstützen können. Da sie zudem innen/oben an dem Dickenverstellschieber abgestützt sind und zugleich eine Abstützung in der Nähe des Stellgliedes erfolgt, liegt eine stabile und großflächige Dreipunktlagerung vor, die den auftretenden Betriebsdrücken gerecht wird. Hierbei stützt sich der Dickenverstellschieber seinerseits an dem Spritzkopfriegel ab, der entsprechend stabil ausgebildet ist.

Die erfindungsgemäße Anordnung bietet die Möglichkeit, mit einer einfachen Handverstellung zu arbeiten, wobei auch bei Handverstellung stets die Symmetrie des Laufstreifenprofils gewahrt ist. Ferner können auch oberhalb des Dickenverstellschiebers wie auch seitlich der die Stellglieder betätigenden Gewindespindel die Stellmotoren angeflanscht sein, mit denen per Programm die unterschiedlichen Reifenformen und Profile abrufbar eingestellt werden können.

Die Erfindung bietet ferner die einfache Möglichkeit, einen Koextruder anzuschließen, der zur Bindegummiunterspritzung die längere Trapezseite beaufschlagt und vorzugsweise in Extrusionsrichtung gesehen im Übergangsbereich zwischen dem Dickenverstellschieber und den Flankenschablonen mündet. Hierzu kann eine an sich bekannte schlitzförmige Breitdüse mit einer konischen Vorkammer kombiniert der Extruderschnecke nachgeschaltet sein, so daß sich eine gleichförmige Bindegummischicht über die Laufstreifenbreite ergibt.

Besonders günstig ist es auch, wenn die Gewindespindel für die Stellglieder der Flankenschablonen auf einem Axiallager zentral d.h. in der Mitte zwischen den beiden Stellgliedern, abgestützt ist. Hierdurch werden die Einstelltoleranzen optimiert, und es ist stets sichergestellt, daß eine symmetrische Ausbildung des Laufstreifenprofils gegenüber der Mittelachse des Hauptextruders erfolgt.

Weitere Einzelheiten, Vorteile und Merkmale ergeben sich aus der nachfolgenden Beschreibung mehrerer Ausführungsbeispiele und der Zeichnung.

Es zeigen:

Fig. 1     einen Schnitt durch eine Ausführungsform eines erfindungsgemäßen Laufstreifen-Spritzkopfes gemäß Fig. 1.

Fig. 2     eine Ansicht des erfindungsgemäßen Spritzkopfes in einer Ausführungsform ohne Koextruder und nach Abschwenken des Spritzkopfriegels;

Fig. 3     eine Ansicht eines erfindungsgemäßen Extruderspritzkopfes mit teilweise aufgebrochenem Koextruder; und

Fig. 4     einen Schnitt durch eine erfindungsgemäße Flankenschablone.

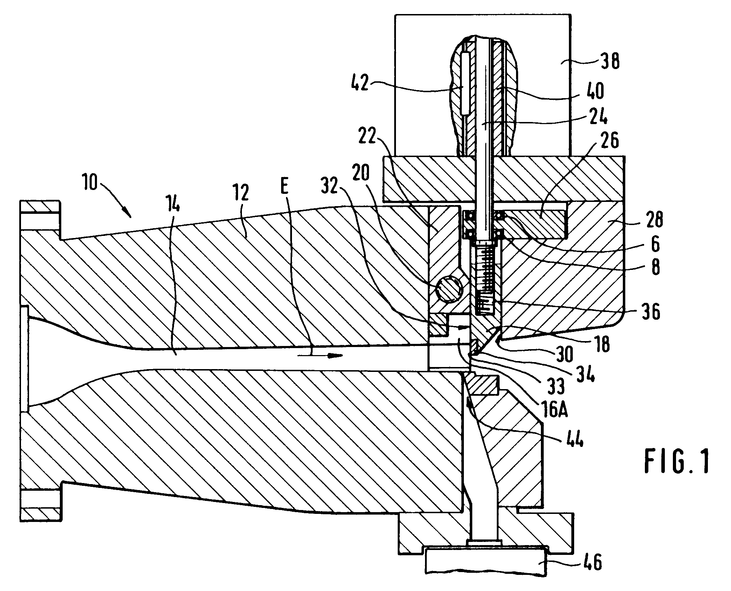

Ein erfindungsgemäßer Laufstreifen-Spritzkopf 10 weist einen Spritzkopfkörper 12 auf, in dem ein Hauptextruderkanal 14 ausgebildet ist, der diesen mittig und in Längsrichtung durchtritt. An der Mündung des Hauptextruderkanals ist erfindungsgemäß eine Kombination aus zwei Flankenschablonen, von denen in Fig. 1 eine Flankenschablone 16a dargestellt ist, und einem Dickenverstellschieber 18 angeordnet. Die Flankenschablone 16a ist seitlich über eine Gewindespindel 20 verstellbar, die über einen an dem Spritzkopfkörper 12 befestigten Lagerblock 22 gelagert ist. Der Dickenverstellschieber 18 ist ebenfalls über eine Gewindespindel 24 schiebebeweglich gelagert, wobei die Gewindespindel 24 über einen weiteren Lagerblock 26 an einem Spritzkopfriegel 28 gelagert ist, der von dem Spritzkopfkörper 12 abschwenkbar ist.

Zugleich weist der Spritzkopfriegel 28 eine Stützfläche 30 für den Dickenverstellschieber 18 auf, während die Flankenschablone 16a an einer der Stützfläche 30 gegenüberliegenden Gleitfläche 32 an den Dickenverstellschieber 18 abgestützt ist und dort paßgenau geführt wird. Beim Abschwenken des Spritzkopfriegels 28 erfolgt die Trennung zum Spritzkopfkörper 12 hin an der Gleitfläche 32, so daß der Dickenverstellschieber 18 und die Flankenschablone 16a voneinander getrennt werden und je freiliegen.

Der Dickenverstellschieber 18 läuft an seinem unteren Ende gegen die Extrusionsrichtung E konisch zu, wobei an einer der Extrusionsrichtung E zugewandten unteren Arbeitskante 33 eine auswechselbare Arbeitsleiste 34 angeschraubt ist.

Ferner weist der Dickenverstellschieber 18 ein Innengewinde 36 auf, in welches ein entsprechendes Außengewinde der Gewindespindel 24 eingreift. Um eine möglichst exakte Verstellmöglichkeit sicherzustellen, sind das Innengewinde 36 und das Außengewinde der Gewindespindel 24 als Feingewinde ausgebildet. Die Gewindespindel 24 erstreckt sich nach oben zu einem Stellmotor 38, mit welchem sie über eine Hülse 40 über eine Nut/Federverbindung 42 verbunden ist. Der Stellmotor 38 erlaubt eine sehr feine Verstellung des Dickenverstellschiebers 18 auch gegen die bei der Extrusion auftretenden Kräfte, und zwar mit einer Auflösung in der Größenordnung von 0,1 mm.

Dem Dickenverstellschieber 18 gegenüberliegend ist eine Mündung 44 eines Koextruders 46 vorgesehen, die ritzförmig ausgebildet ist und sich über die gesamte Arbeitsbreite der Flankenschablonen erstreckt. Besonders günstig ist es, daß bei engerer Einstellung der Flankenschablonen je entsprechende Teile der Mündung 44 von dieser abgedeckt werden, so daß hier nicht überschüssiges Bindegummi austreten kann. Damit ist auch die Lage der Mündung 44 vorgezeichnet, denn diese befindet sich im Übergangsbereich zwischen den Flankenschablonen 16 und dem Dickenverstellschieber 18, jedoch noch knapp unterhalb der Flankenschablonen.

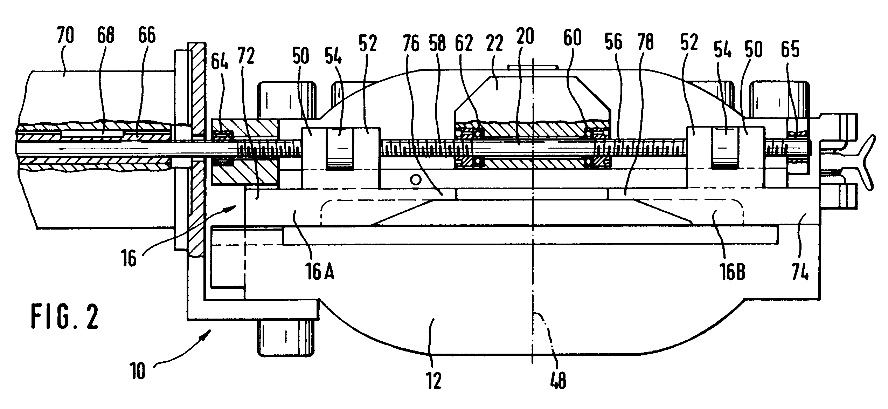

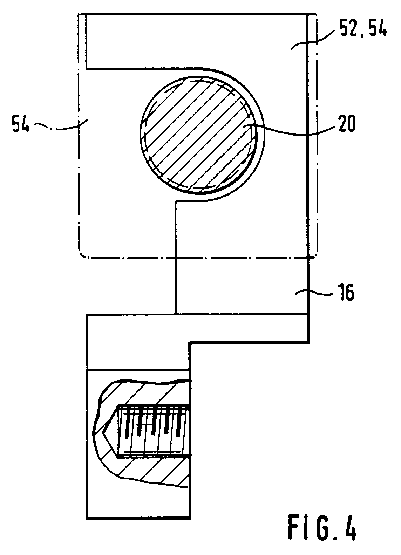

Aus Fig. 2 sind der Aufbau und die Anordnung der erfindungsgemäßen Flankenschablonen 16 ersichtlich. Die Flankenschablonen 16a und 16b sind einander gegenüberliegend und zur Extrusionsmittenachse 48 symmetrisch ausgebildet und weisen je zwei beabstandete Führungszapfen 50 und 52 auf, die je die Form eines U bilden. Es ist je ein Stellglied 54 vorgesehen, das mit der Gewindespindel 20 im Gewindeeingriff steht und über die Führungszapfen 52 und 50 die Flankenschablonen 16 führt. Mit geringer Toleranz entsprechen hierbei die Abmessungen der Stellglieder 54 je der lichten Weite zwischen den Führungszapfen 52 und 50, so daß die Flankenschablonen 16 von den Stellgliedern 54 noch von Hand abnehmbar sind, jedoch die Exaktheit der Führung gewährleistet ist. Die Ausbildung der Führungszapfen 52 und 50 im einzelnen ist auch aus Fig. 4 ersichtlich.

Die Gewindespindel 20 weist zueinander gegenläufige Trapezgewinde 56 und 58 auf, wobei je ein Stellglied 54 mit jedem der Trapezgewinde 56 und 58 im Gewindeeingriff steht. In dem Lagerblock 22 sind einander gegenüberliegende Axiallager 60 und 62 vorgesehen, die die Gewindespindel 20 axial und auch radial abstützen. Zusätzlich sind an den äußeren Enden der Gewindespindel 20 je Radiallager 64 und 65 vorgesehen. Die Gewindespindel ist über das Radiallager 64 hinaus verlängert und wird von einer Hülse 66 umgeben, die über eine Nut/Feder-Verbindung 68 mit einem Stellmotor 70 in Eingriff steht.

Bei der Betätigung des Stellmotors 70 bewegen sich die Flankenschablonen 16 symmetrisch aufeinander zu oder voneinander weg, wobei die jeweiligen engsten bzw. weitesten Endstellungen durch die den Erfordernissen entsprechende Laufstreifenbreite bzw. die daran angepaßte entsprechende Länge der Trapezgewinde 58 und 56 vorgegeben sind. Auch in der engsten Stellung der Flankenschablonen 16 überlappen sich äußere Endbereiche 72 und 74 je noch mit der Gleitfläche 32 an dem Spritzkopfriegel 28 bzw. mit Führungsflächen an dem Spritzkopfkörper 12, während die inneren oberen Endbereiche 76 und 78 der Flankenschablonen 16 auch in der äußersten Endstellung noch von dem in Fig. 2 nicht dargestellten Dickenverstellschieber 18 überlappt sind.

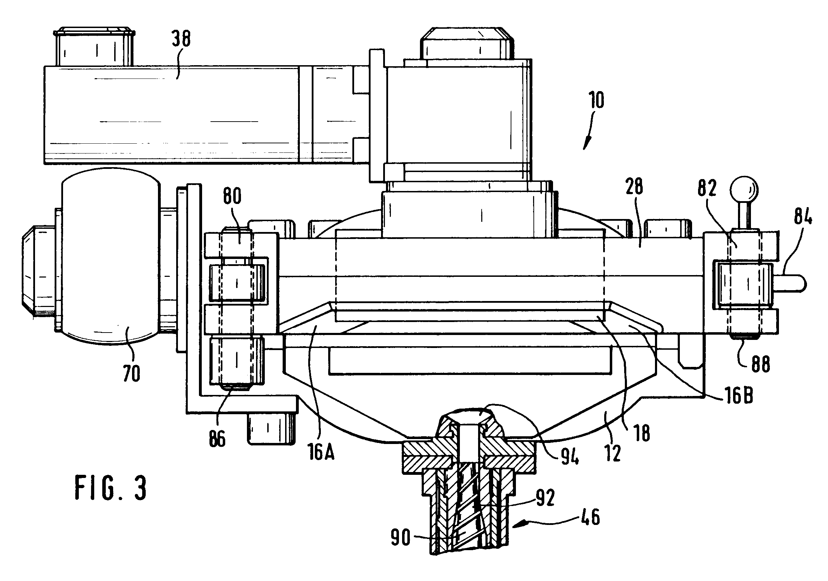

Aus Fig. 3 ist die Anordnung des Schwingriegels vor dem Spritzkopfkörper 12 ersichtlich. Der Spritzkopfriegel 28 ist an einem ziemlich massiven Gelenk 80 an den Spritzkopfkörper 12 gelagert. An der gegenüberliegenden Seite ist über ein weiteres Gelenk 82 ein Verschlußmechanismus 84 gelagert, mit welchem der Spritzkopfriegel 28 satt an dem Spritzkopf 12 anliegend arretierbar ist. Die Gelenke 80 und 82 weisen je Gelenkbolzen 86 und 88 auf, die in Wälzlagern präzise gelagert sind. Der Stützkopfriegel 28 weist ferner eine trapezförmige Ausnehmung auf, die dem Laufstreifenprofil mit der maximalen zu erstellenden Größe entspricht und an der unteren Kante des Spritzkopfriegels 28 vorgesehen ist. Diese Ausnehmung wird dann im Betrieb teilweise von dem Dickenverstellschieber 18 und teilweise von den Flankenschablonen 16 überdeckt.

Der Koextruder 46 für die Bindegummiunterspritzung weist eine Extruderschnecke 90 auf, die an sich einen beliebigen geeigneten Aufbau haben kann. Besonders günstig ist jedoch die Ausbildung mit mittigem Verdichtungsbereich 92, wie es in Fig. 3 dargestellt ist. An die Extruderschnecke 90 schließt sich dann ein doppelt konischer Bereich 94 an, der das Bindegummi über die gesamte Laufstreifenbreite verteilt.

Aus Fig. 4 ist der Querschnitt einer Flankenschablone 16 ersichtlich. Die Führungszapfen 52 und 50 umgreifen die Gewindestange 20, jedoch so, daß sie nach vorne, d.h. in die in Fig. 4 rechts dargestellte Richtung von der Gewindestange abnehmbar sind. Damit wird eine optimale Führung an dem gestrichelt angedeuteten Stellglied 54 erreicht, denn es steht eine große Anlagefläche zwischen Stellglied 54 und den Führungszapfen 52 und 54 zur Verfügung, wobei dennoch die Flankenschablonen 16 auf einfache Weise entnommen und ausgewechselt werden können.

Insgesamt beträgt die Zeit für das Wechseln von Führungsschablonen lediglich etwa eine Minute. Diese Führungsschablonen müssen jedoch sehr selten gewechselt werden, da aufgrund der Verstellmöglichkeit mit ein und denselben Führungsschablonen eine Vielzahl von Laufstreifenprofilen erzeugbar sind.

Zur weiteren Steigerung der Extrusionsgenauigkeit ist es vorgesehen, auslaßseitig des Spritzkopfes, insbesondere unterhalb des Spritzkopfriegels 28, eine Erfassungsvorrichtung vorzusehen. Diese kann ein Laufrad aufweisen, mit welchem die extrudierte Länge des Laufstreifens bestimmbar ist, wobei es günstig ist, das Laufrad zugleich schwenkbeweglich zu lagern und als Meßvorrichtung für die Laufstreifen-Dicke zu verwenden. Hierzu ist mit dem Laufrad ein Winkelgeber verbunden, und über eine Regelschaltung wird der Dickenverstellschieber 18 so eingestellt, daß mit diesem Regelkreis eine Anpassung des Istwertes an den eingestellten Sollwert vorgenommen wird.

Durch diese Maßnahme kann die Extrusionstoleranz weiter vermindert werden, was vor allem dann wichtig ist, wenn die verwendeten Gummimischungen innerhalb ein und derselben Charge oder von Charge zu Charge unterschiedliche rheologische Eigenschaften aufweisen oder wenn Verschnitt verwendet wird. Die Toleranz kann durch diese Maßnahme auch dann auf +/- 0,2 mm vermindert werden.

Zur Vereinfachung der Bedienung ist es ferner möglich, anstelle der Sollwerteinstellung einen Festwertspeicher zu verwenden, in welchem unterschiedliche Profile einprogrammiert sind, so daß die Bedienperson lediglich über die Anwahl einer Programmnummer das entsprechend gewünschte Profil abrufen muß und die erforderliche Laufstreifen-Breite und -dicke wie auch -länge erhält, wobei auch die vorgesehenen Schrumpffaktoren berücksichtigt werden können.

Mit einer entsprechenden Steuereinheit ist es auch möglich, die Anzahl der gewünschten Laufstreifen zu programmieren und, während die vorherige Größe noch erzeugt wird, bereits die nachfolgende Reifengröße vorzuprogrammieren, so daß der Durchsatz der Anlage optimiert ist.

Es versteht sich, daß die Erfindung nicht auf die Extrusion reiner Laufstreifen in dem Sinne, daß sie für die unmittelbare Applikation gedacht sind, beschränkt ist. Vielmehr können neben den Rohlaufstreifen auch Rohlinge von generell rechtwinkligem Querschnitt extrudiert werden, die für das Erstellen sog. vorvulkanisierter Laufstreifen dienen.

**Patentansprüche**

1. Laufstreifen-Spritzkopf für Reifen-Laufstreifen, mit einem Dickenverstellschieber und zwei Flankenschablonen, mit welchen ein im wesentlichen trapezförmiges Laufstreifenprofil formbar ist, dadurch **gekennzeichnet, daß** die Flankenschablonen (16a, 16b) in seitlicher Richtung einstellbar gelagert und in einer zur Extrusionsrichtung parallelen Richtung an dem Dickenverstellschieber (18) abgestützt sind, welcher sich auf der kürzeren Trapezseite über die ganze Laufstreifenbreite erstreckt, und entweder der Dickenverstellschieber (18) oder die Flankenschablonen (16a, 16b) an einem abschwenkbaren Spritzkopfriegel (28) gelagert sind.

2. Laufstreifen-Spritzkopf nach Anspruch 1, dadurch gekennzeichnet, daß eine Arbeitskante (33) des Dickenverstellschiebers (18) und die sich zur Mitte erstreckenden Endbereiche (76, 78) der Flankenschablonen (16a, 16b) einander in allen Betriebszuständen innerhalb der Stellwege des Dickenverstellschiebers (18) und der Flankenschablonen (16a, 16b) überlappen.

3. Laufstreifen-Spritzkopf nach Anspruch 1 oder 2, dadurch gekennzeichnet, daß die Flankenschablonen (16a, 16b) in seitlicher Richtung an Stellgliedern (54) geführt sind, von welchen sie nach Abschwenken des Spritzkopfriegels (28) nach vorne abnehmbar sind.

4. Laufstreifen-Spritzkopf nach einem der vorhergehenden Ansprüche, dadurch gekennzeichnet, daß der in dem Spritzkopfriegel (28) gelagerte Dickenverstellschieber (18) einstückig ausgebildet ist und eine gegen die Extrusionsrichtung gerichtete Gleitfläche (32) für die Flankenschablonen (16a, 16b) aufweist.

5. Laufstreifen-Spritzkopf nach einem der vorhergehenden Ansprüche, dadurch gekennzeichnet, daß die Arbeitskante (33) des Dickenverstellschiebers (18) durch eine auswechselbare Arbeitsleiste (34) gebildet ist.

6. Laufstreifen-Spritzkopf nach einem der vorhergehenden Ansprüche, dadurch gekennzeichnet, daß die Flankenschablonen (16a, 16b) über Stellglieder (54) an einer Gewindespindel (20) mit gegenläufigen Gewindebereichen (Trapezgewinde 58; Trapezgewinde 56) geführt sind.

7. Laufstreifen-Spritzkopf nach Anspruch 6, dadurch gekennzeichnet, daß die Gewindespindel (20) zwischen den gegenläufigen Gewindebereichen (Trapezgewinde 58; Trapezgewinde 56) über ein auch in den axialen Richtungen abstützendes Axiallager (60, 62) geführt ist und außerhalb der Gewindebereiche je über Radiallager (64, 65) abgestützt sind und insbesondere die Gewindespindel (20) seitlich eine Hülse (66) mit einer Nut/Feder-Verbindung (68) aufweist, über welche sie von einem Stellmotor (70) antreibbar ist.

8. Laufstreifen-Spritzkopf nach einem der vorhergehenden Ansprüche, dadurch gekennzeichnet, daß an dem Dickenverstellschieber (18) ein Gewinde, insbesondere ein Innen-Feingewinde, (36) ausgebildet ist, in welches eine weitere Gewindespindel (24) eingreift.

9. Laufstreifen-Spritzkopf nach Anspruch 8, dadurch gekennzeichnet, daß die Gewindespindel (24) in einem Lagerblock (26) über ein auch in den axialen Richtungen abstützendes Axiallager (6 und 8) geführt ist und insbesondere die weitere Gewindespindel (24') oben eine Hülse (40) mit einer Nut/Federverbindung (42) aufweist, über welche sie mit einem weiteren Stellmotor (38) verbunden ist.

10. Laufstreifen-Spritzkopf nach einem der vorhergehenden Ansprüche, dadurch gekennzeichnet, daß an der längeren Trapezseite dem Dickenverstellschieber (18) gegenüberliegend ein Koextruder (46) anschließbar ist, dessen Mündung (44) insbesondere in Hauptextrusionsströmungsrichtung hinter der Arbeitskante der Flankenschablonen (16a, 16b) und vor der Arbeitskante (34) des Dickenverstellschiebers (18) angeordnet ist.

11. Laufstreifen-Spritzkopf nach einem der vorhergehenden Ansprüche, dadurch gekennzeichnet, daß die Flankenschablonen (16a, 16b) seitlich unten dergestalt verlängert sind, daß sie sich auch in der schmalsten Einstellung in seitlicher Richtung an einer Stützfläche (38) an dem Spritzkopfriegel (28) abstützen und insbesondere eine Führungsfläche an dem dem Spritzkopfriegel (28) gegenüberliegenden Teil des Spritzkopfes (10) für die Flankenschablonen (16a, 16b) ausgebildet ist, die von den Flankenschablonen (16a, 16b), auch in der breitesten Stellung, abgedeckt ist.

12. Laufstreifen-Spritzkopf nach einem der vorhergehenden Ansprüche, dadurch gekennzeichnet, daß eine Erfassungsvorrichtung vorgesehen ist, mit welcher die Länge und/oder die Dicke des extrudierten Laufstreifens erfaßbar ist, die insbesondere an einen Regelschaltkreis angeschlossen ist, der mit dem Dickenverstellschieber (18) verbunden ist.

## Claims

1. Injector head for producing tread strips for tires, having a thickness-adjusting slide member and two side plates for forming an essentially trapezoidal tread strip profile characterized in that the side plates (16a, 16b) are mounted adjustably in a lateral direction and are supported against the thickness-adjusting slide member (18) in a direction parallel to the direction of extrusion, with that thickness-adjusting slide member, on the shorter side of the trapezoid, extending over the entire tread strip width, and with the thickness-adjusting slide member (18) or the side plates (16a, 16b) are mounted on an injector head bar (28) which is pivotably mounted.

2. Injector head according to claim 1, characterized in that a working edge (33) of the thickness-adjusting slide member (18) and the end regions (76, 78) of the side plates (16a, 16b) overlap one another in all operating states within adjustment displacements of the thickness-adjusting slide member (18) and the side plates (16a, 16b).

3. Injector head according to claim 1 or 2, characterized in that the side plates (16a, 16b) are guided on adjustmemt members (54) in a lateral direction, with that side plates being removable towards the front from the adjustment members (54) after the injector head bar (28) has been swivelled away.

4. Injector head according to one of the preceding claims, characterized in that the thickness-adjusting slide member (18) is mounted in said injector head bar (28) and is of one-piece construction, and is provided, for the side plate (16a, 16b) with a slide surface (32) facing opposite to the direction of extrusion.

5. Injector head according to one of the preceding claims, characterized in that the working edge (33) of the thickness-adjusting slide member (18) is formed by an exchangable working guide (34).

6. Injector head according to one of the preceding claims, characterized in that the side plates (16a, 16b) are supported on a threaded spindle (20) having oppositely directed thread portions (trapezoidal thread 58; trapezoidal thread 56), via adjustment members (54).

7. Injector head according to claim 6, characterized in that the threaded spindle (20) is supported between the oppositely directed threaded portions (trapezoidal thread 58; trapezoidal thread 56) via an axial bearing (60, 62) supporting also in the axial directions and is supported outside of the thread portions via radial bearings (64, 65), respectively, and that preferably the threaded spindle (20) comprises a sleeve (66) with a tongue and groove joint (68) at a lateral position, by which it can be driven by a servo-motor.

8. Injector head according to one of the preceding claims, characterized in that a thread, especially an internal fine thread (36) is formed at the thickness-adjusting slide member (18) which is engaged with a further threaded spindle (24).

9. Injector head according to claim 8, characterized in that the threaded spindle (24) is guided in a mounting block (26) via an axial bearing (6 und 8) which also provides support in the axial direction, and that especially the further threaded spindle (24') comprises a sleeve (40) with a tongue and groove joint (24) at an upper portion thereof, for connecting the sleeve to a further servo-motor (38).

10. Injector head according to one of the preceding claims, characterized in that a coextruder (46) may be connected to the longer side of said trapezoid opposite to the thickness-adjusting slide member (18), the mouth (44) of which is arranged in the main extrusion flow direction downstream of the working edges of the side plates (16a, 16b) and upstream of the working edge (34) of the thickness-adjusting slide member (18).

11. Injector head according to one of the preceding claims, characterized in that the side plates (16a, 16b) have a laterally and downwardly directed extension of such a shape that even in the narrowest setting in the lateral direction, they are supported on a support surface (38) on that injector head bar (28), preferably with a guide surface being provided for said side plates (16a, 16b) on a portion of that injector head (10) that faces the injector head bar (28), and that is overlapped by that side plates (16a, 16b) even in the widest setting.

12. Injector head according to one of the preceding claims, characterized in that a detection means is provided for detecting the length and/or the thickness of the extruded tread strip which preferably is connected to a control circuit that is connected to the thickness-adjusting slide member (18).

## Revendications

1. Tête d'extrusion de bandes de roulement, pour bandes de roulement de pneumatiques, comprenant un coulisseau de réglage de l'épaisseur et deux gabarits de flancs, avec lesquels on peut former un profilé de bande de roulement sensiblement trapézoïdal, caractérisée en ce que les gabarits de flancs (16a, 16b) sont montés réglables dans la direction latérale et prennent appui, dans une direction parallèle à la direction d'extrusion, sur le coulisseau (18) de réglage de l'épaisseur qui s'étend sur le petit côté du trapèze sur toute la largeur de la bande de roulement et, soit le coulisseau (18) de réglage de l'épaisseur, soit les gabarits de flancs (16a, 16b) sont montés sur une traverse (28) de tête d'extrusion rabattable.

2. Tête d'extrusion de bandes de roulement selon la revendication 1, caractérisée en ce qu'une arête de travail (33) du coulisseau (18) de réglage de l'épaisseur et les régions d'extrémité (76, 78) des gabarits de flancs (16a, 16b) qui se dirigent vers le milieu se recouvrent mutuellement dans toutes les conditions de fonctionnement dans les limites des courses de réglage du coulisseau (18) de réglage de l'épaisseur et des gabarits de flancs (16a, 16b).

3. Tête d'extrusion de bandes de roulement selon la revendication 1 ou 2, caractérisée en ce que les gabarits de flancs (16a, 16b) sont montés mobiles dans la direction latérale sur des organes de réglage (54) dont ils peuvent être séparés par un mouvement dirigé vers l'avant après le rabattement de la traverse (28) de la tête d'extrusion.

4. Tête d'extrusion de bandes de roulement selon une des revendications précédentes, caractérisée en ce que le coulisseau (18) de réglage de l'épaisseur monté dans la traverse (28) de la tête d'extrusion est formé en une seule pièce et présente une surface de glissement (32) pour le glissement des gabarits de flancs (16a, 16b) qui est dirigée à l'opposé de la direction d'extrusion.

5. Tête d'extrusion de bandes de roulement selon une des revendications précédentes, caractérisée en ce que l'arête de travail (33) du coulisseau (18) de réglage de l'épaisseur est formée par une lame de travail interchangeable (34).

6. Tête d'extrusion de bandes de roulement selon une des revendications précédentes, caractérisée en ce que les gabarits de flancs (16a, 16b) sont guidés par des organes de réglage (54) le long d'une vis (20) possédant des régions filetées à pas opposés (filetage trapézoïdal 58 ; filetage trapézoïdal 56).

7. Tête d'extrusion de bandes de roulement selon la revendication 6, caractérisée en ce que la vis (20) est guidée, entre les régions filetées à pas opposés (filetage trapézoïdal 58 ; filetage trapézoïdal 56) au moyen d'un palier axial (60, 62) qui lui donne aussi appui dans les deux directions axiales et, en dehors des régions filetées, par un palier radial (64, 65) de chaque côté et, en particulier, la vis (20) présente latéralement un manchon (66) muni d'une liaison rainure/clavette (68) par l'intermédiaire de laquelle elle peut être entraînée par un servo-moteur (70).

8. Tête d'extrusion de bandes de roulement selon une des revendications précédentes, caractérisée en ce que, sur le coulisseau (18) de réglage de l'épaisseur, est formé un filetage, en particulier un filetage fin intérieur (36) dans lequel est engagée une autre vis (24).

9. Tête d'extrusion de bandes de roulement selon la revendication 8, caractérisée en ce que la vis (24) est guidée dans un bloc de palier (26) par l'intermédiaire d'un palier axial (6 et 8) qui lui donne aussi appui dans les directions axiales et, en particulier, l'autre vis (24') présente en haut un manchon (40) muni d'une liaison à rainure/clavette (42) par l'intermédiaire de laquelle elle est reliée à un autre servo-moteur (38).

10. Tête d'extrusion de bandes de roulement selon une des revendications précédentes, caractérisée en ce qu'au droit du grand côté du trapèze, en face du coulisseau (18) de réglage de l'épaisseur, peut être raccordée une coextrudeuse (46) dont l'orifice de sortie 44 est disposé en particulier dans la direction du courant principal de l'extrusion, en arrière du bord de travail des gabarits de flancs (16a, 16b) et en amont de l'arête de travail (34) du coulisseau (18) de réglage de l'épaisseur.

11. Tête d'extrusion de bandes de roulement selon une des revendications précédentes, caractérisée en ce que les gabarits de flancs (16a, 16b) sont prolongés latéralement vers le bas de manière qu'ils prennent appui, même dans la position de réglage la plus étroite, dans la direction latérale, contre une surface d'appui (38) prévue sur la traverse (28) de la tête d'extrusion et, en particulier, une surface de guidage est formée sur la partie de la tête d'extrusion (10) portant les gabarits de flancs (16a, 16b) qui est à l'opposé de la traverse (28) de la tête d'extrusion, surface qui est recouverte par les gabarits de flancs (16a, 16b), même dans la position de plus grande largeur.

12. Tête d'extrusion de bandes de roulement selon une des revendications précédentes, caractérisée en ce qu'il est prévu un dispositif capteur avec lequel la longueur et/ou l'épaisseur de la bande de roulement extrudée peut être captée, et qui est raccordée en particulier à un circuit de régulation qui est relié au coulisseau (18) de réglage de l'épaisseur.

FIG.1

EP 0 355 638 B1

FIG. 2

EP 0 355 638 B1

FIG. 3

52,54

54

20

16

FIG. 4